# EUROPÄISCHE PATENTANMELDUNG

(11) **EP 2 854 261 A1**
(43) Veröffentlichungstag der Anmeldung: **01.04.2015**
(21) Anmeldenummer: 13185955.5
(22) Anmeldetag: 25.09.2013
(51) Int. Cl.: H02K 9/00

(54) **Verfahren zum Kühlen einer rotierenden elektrischen Maschine**

(71) Anmelder: Siemens Aktiengesellschaft, 80333 München (DE)
(72) Erfinder: Grau Sorarrain, Esteban, 40215 Düsseldorf (DE); Jäkel, Christian, 45468 Mülheim an der Ruhr (DE); Koebe, Mario, Dr., 45478 Mülheim an der Ruhr (DE); Kowalski, Matthias, 45470 Mülheim an der Ruhr (DE); Lehmann, Christoph, Dr., 47506 Neukirchen-Vluyn (DE); Mashkin, Andrey, 50672 Köln (DE); Plotnikova, Olga, 42369 Wuppertal (DE); Schild, Carolin, 45478 Mülheim an der Ruhr (DE)

(57) **Zusammenfassung**

Die Erfindung betrifft ein Verfahren zum Kühlen einer rotierenden elektrischen Maschine, insbesondere eines Turbogenerators, unter Verwendung eines in zumindest einem Teilbereich zwischen einem Rotor und einem Stator der rotierenden elektrischen Maschine strömenden Kühlfluids, dadurch gekennzeichnet, dass als Kühlfluid gekühlte Umgebungsluft verwendet wird.

## Beschreibung

Die Erfindung betrifft ein Verfahren zum Kühlen einer rotierenden elektrischen Maschine, insbesondere eines Turbogenerators, unter Verwendung eines in zumindest einem Teilbereich zwischen einem Rotor und einem Stator der rotierenden elektrischen Maschine strömenden Kühlfluids.

Des Weiteren betrifft die Erfindung eine Anordnung zum Kühlen einer rotierenden elektrischen Maschine, insbesondere eines Turbogenerators, unter Verwendung eines Kühlfluids, wobei die Anordnung der rotierenden elektrischen Maschine strömungstechnisch vorschaltbar ist.

Rotierende elektrische Maschinen in Form von Turbogeneratoren werden in Kraftwerken zum Erzeugen von elektrischer Energie eingesetzt. Hierzu ist ein Turbogenerator mechanisch mit wenigstens einer Gasturbine und/oder Dampfturbine gekoppelt, wobei der Turbogenerator zusammen mit der Gasturbine bzw. Dampfturbine einen Turbosatz bildet. Eine Gasturbine umfasst üblicherweise eine Turbine, einen Verdichter und eine Brennkammer, wobei der Verdichter über die Turbine antreibbar ist.

Während des Betriebs einer rotierenden elektrischen Maschine wird zwangsläufig Wärme in dem Stator und/oder dem Rotor der rotierenden elektrischen Maschine erzeugt. Diese Verlustwärme entsteht durch Umwandlung von mechanischer Energie in elektrische Energie mittels der rotierenden elektrischen Maschine.

Die in einem Stator und/oder einem Rotor einer rotierenden elektrischen Maschine erzeugte Wärme muss zu einem sicheren Betrieb der rotierenden elektrischen Maschine aus der rotierenden elektrischen Maschine abgeführt werden. Dies ist insbesondere deshalb erforderlich, da an dem Stator und/oder dem Rotor elektrische Isolierungen vorhanden sind, welche ab Erreichen einer bestimmten Temperatur beeinträchtigt werden würden, was zu schädigenden elektrischen Kurzschlüssen führen könnte. Je mehr Wärme aus einer rotierenden elektrischen Maschine abgeführt wird, desto höher kann die rotierende elektrische Maschine ausgelastet werden, was mit einer entsprechenden Leistungssteigerung einhergeht.

Herkömmlich wird zur Wärmeabführung aus einer luftgekühlten rotierenden elektrischen Maschine bzw. zur Kühlung des Stators und/oder des Rotors der rotierenden elektrischen Maschine Luft verwendet, welche an beiden axialen Enden der rotierenden elektrischen Maschine axial zwischen den Stator und den Rotor eingeleitet und in der Mitte der rotierenden elektrischen Maschine radial aus der rotierenden elektrischen Maschine abgeführt wird. Alternativ kann die Wärmeabführung unter Verwendung von Wasserstoff oder einer Kombination aus Wasserstoff und Reinwasser erfolgen.

Die Wärmeerzeugung in einem Stator und/oder einem Rotor einer rotierenden elektrischen Maschine erfolgt üblicherweise nicht gleichmäßig. Das soll heißen, dass es Bereiche der rotierenden elektrischen Maschine gibt, in denen mehr Wärme als in anderen Bereichen der rotierenden elektrischen Maschine erzeugt wird und/oder die nicht ausreichend gekühlt werden. Die Bereiche, in denen mehr Wärme erzeugt wird, werden auch als "Hot-Spots" bezeichnet. In solchen Hot-Spots kann es durch die betriebsbedingte Wärmeerzeugung schneller zu unzulässigen und schädigenden Überhitzungen kommen als in weniger mit Wärme beaufschlagten Bereichen einer rotierenden elektrischen Maschine. Nachteilig ist insbesondere, dass die herkömmlich zur Wärmeabführung verwendete Umgebungsluft beim Erreichen eines Hot-Spots bereits so viel aus anderen Bereichen einer rotierenden elektrischen Maschine stammende Wärme aufgenommen hat, dass keine ausreichende Kühlung eines Hot-Spots mehr möglich ist. Folglich kann mittels einer herkömmlichen Wärmeabführung ein sicherer Betrieb einer stark ausgelasteten rotierenden elektrischen Maschine nicht zuverlässig und dauerhaft gewährleistet werden.

Aufgabe der Erfindung ist es, einen sicheren Betrieb einer stark bis maximal ausgelasteten rotierenden elektrischen Maschine dauerhaft sicherzustellen.

Nach dem erfindungsgemäßen Verfahren zum Kühlen einer rotierenden elektrischen Maschine, insbesondere eines Turbogenerators, unter Verwendung eines in zumindest einem Teilbereich zwischen einem Rotor und einem Stator der rotierenden elektrischen Maschine strömenden Kühlfluids wird als Kühlfluid gekühlte Umgebungsluft verwendet.

Da gemäß der Erfindung zum Kühlen eines Rotors und/oder Stators einer rotierenden elektrischen Maschine gekühlte Umgebungsluft statt, wie herkömmlich, ungekühlte Umgebungsluft verwendet wird, kann aufgrund des dadurch bedingten größeren Temperaturunterschieds zwischen Kühlfluid und zu kühlenden Bauteilen eine größere Wärmemenge von den Bauteilen abgeführt werden.

Zudem wird mit der Erfindung erreicht, dass das Kühlfluid bei Erreichen eines Hot-Spots nicht durch Aufnahme von Wärme aus anderen Bereichen einer rotierenden elektrischen Maschine bereits derart aufgewärmt worden ist, dass keine ausreichende Kühlung eines Hot-Spots mehr möglich ist.

Folglich kann eine erfindungsgemäß gekühlte rotierende elektrische Maschine unter höherer Auslastung betrieben werden, als es bei herkömmlich umgebungsluftgekühlten rotierenden elektrischen Maschinen der Fall ist.

Die gekühlte Umgebungsluft wird bevorzugt gezielt wenigstens einem bestimmten Abschnitt der rotierenden elektrischen Maschine zugeführt. Bei Bedarf kann die gekühlte Umgebungsluft auch gezielt zwei oder mehreren bestimmten Abschnitten der rotierenden elektrischen Maschine zugeführt werden. Vorzugsweise wird die gekühlte Umgebungsluft gezielt solchen Abschnitten der rotierenden elektrischen Maschine zugeführt, an denen bekanntermaßen die höchste Wärmebelastung an der rotierenden elektrischen Maschine auftritt, nämlich den sogenannten Hot-Spots.

Bevorzugt wird zum Kühlen der Umgebungsluft ungekühlte Umgebungsluft komprimiert, die komprimierte Umgebungsluft, insbesondere auf Umgebungstemperatur, abgekühlt und die abgekühlte Umgebungsluft, insbesondere auf Umgebungsdruck, dekomprimiert. Durch diese Schritte wird die Umgebungsluft abgekühlt. Diese Verfahrensschritte sind durch einfache konstruktive Mittel realisierbar, um hinreichend gekühlte Umgebungsluft zu erzeugen.

Die ungekühlte Umgebungsluft wird bevorzugt mittels wenigstens eines Verdichters komprimiert, wobei als Verdichter ein Verdichter einer mit der rotierenden elektrischen Maschine mechanisch gekoppelten Gasturbine oder ein separater Verdichter verwendet wird. Wird auf einen Verdichter einer mit der rotierenden elektrischen Maschine mechanisch gekoppelten Gasturbine zurückgegriffen, lässt sich der zur Realisierung der Erfindung erforderliche konstruktive Aufwand minimieren, was mit einer entsprechenden Kostenersparnis einhergeht. Alternativ kann eine bereits vorhandene Anlage mittels eines separaten Verdichters nachgerüstet werden. Falls erforderlich, können auch zwei oder mehr Verdichter vorgesehen sein und verwendet werden.

Die komprimierte Umgebungsluft wird bevorzugt mittels wenigstens eines Wärmetauschers, insbesondere auf die Umgebungstemperatur, abgekühlt. Über den Wärmetauscher kann die der komprimierten Umgebungsluft entzogene Wärme einer weiteren Verwendung zugeführt werden. Eine Abkühlung der komprimierten Umgebungsluft auf Umgebungstemperatur wird bevorzugt, jedoch kann auch eine Abkühlung der komprimierten Umgebungsluft auf eine oberhalb der Umgebungstemperatur liegende Temperatur ausreichend sein, um eine gewünschte Kühlung einer rotierenden elektrischen Maschine zu erreichen. Falls erforderlich, können auch zwei oder mehr Wärmetauscher vorgesehen sein und verwendet werden.

Bevorzugt wird die abgekühlte Umgebungsluft mittels wenigstens eines Expansionsventils oder mittels zumindest einer Entspannungsturbine, insbesondere auf Umgebungsdruck, dekomprimiert. Wird die abgekühlte Umgebungsluft mittels einer Entspannungsturbine, insbesondere Industrieturbine, dekomprimiert, kann mittels der Entspannungsturbine weitere Energie erzeugt und einer gewünschten Verwendung zugeführt werden. Konstruktiv einfacher gestaltet sich die Verwendung eines Expansionsventils. Falls erforderlich, können auch zwei oder mehr Expansionsventile bzw. Entspannungsturbinen vorgesehen sein und verwendet werden.

Ferner wird bevorzugt zumindest ein Teil des zwischen dem Rotor und dem Stator strömenden Kühlfluids an wenigstens einem vorgebbaren Abschnitt der rotierenden elektrischen Maschine aus der rotierenden elektrischen Maschine abgesaugt. Vorzugsweise wird Kühlfluid an den Abschnitten der rotierenden elektrischen Maschine aus der rotierenden elektrischen Maschine abgesaugt, an denen sich Hot-Spots befinden. Durch die Absaugung von Kühlfluid aus Abschnitten der rotierenden elektrischen Maschine wird die Wärmeabfuhr aus diesen Abschnitten deutlich verbessert.

Die erfindungsgemäße Anordnung zum Kühlen einer rotierenden elektrischen Maschine, insbesondere eines Turbogenerators, unter Verwendung eines Kühlfluids, die der rotierenden elektrischen Maschine strömungstechnisch vorschaltbar ist, ist zum Erzeugen des Kühlfluids in Form von gekühlter Umgebungsluft eingerichtet. Mit dieser Anordnung sind die oben mit Bezug auf das Verfahren genannten Vorteile entsprechend verbunden.

Die Anordnung weist bevorzugt wenigstens eine an der rotierenden elektrischen Maschine angeordnete Kühlleitung auf, über die gekühlte Umgebungsluft gezielt wenigstens einem bestimmten Abschnitt der rotierenden elektrischen Maschine zuführbar ist. Bei Bedarf können auch zwei oder mehr entsprechende Kühlleitungen vorgesehen sein, welche sich zumindest teilweise innerhalb der rotierenden elektrischen Maschine erstrecken können. Vorzugsweise ist über die Kühlleitungen vorhandenen Hot-Spots gekühlte Umgebungsluft gezielt zuführbar.

Bevorzugt weist die Anordnung wenigstens einen zum Komprimieren von Umgebungsluft eingerichteten Verdichter, zumindest einen zum Abkühlen von komprimierter Umgebungsluft, insbesondere auf Umgebungstemperatur, eingerichteten, dem Verdichter strömungstechnisch nachgeschalteten Wärmetauscher und mindestens eine zum Dekomprimieren von abgekühlter Umgebungsluft, insbesondere auf Umgebungsdruck, eingerichtete, dem Wärmetauscher strömungstechnisch nachgeschaltete Dekompressionseinrichtung auf, wobei die Dekompressionseinrichtung der rotierenden elektrischen Maschine strömungstechnisch vorschaltbar ist.

Der Verdichter ist bevorzugt ein Bestandteil einer mit der rotierenden elektrischen Maschine mechanisch gekoppelten Gasturbine oder ein separates Bauteil.

Ferner ist die Dekompressionseinrichtung bevorzugt durch wenigstens ein Expansionsventil oder durch zumindest eine Entspannungsturbine ausgebildet.

Im Folgenden wird eine bevorzugte Ausführungsform der erfindungsgemäßen Anordnung anhand der beigefügten schematischen Zeichnung erläutert. Es zeigt:

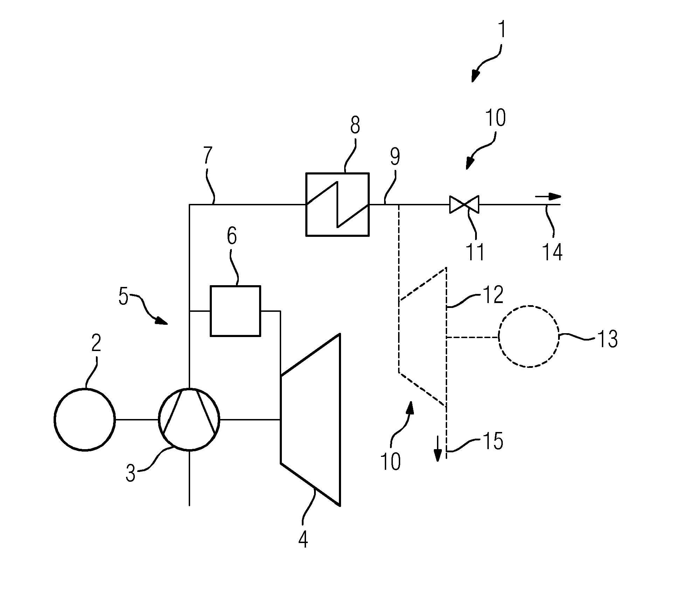

- Fig. 1: einen Darstellung einer beispielhaften Ausführungsform einer erfindungsgemäßen Anordnung.

Figur 1 zeigt ein Ausführungsbeispiel für eine erfindungsgemäße Anordnung 1 zum Kühlen einer rotierenden elektrischen Maschine 2 in Form eines Turbogenerators unter Verwendung eines Kühlfluids. Die Anordnung 1 ist zur Kühlung der rotierenden elektrischen Maschine 2 der rotierenden elektrischen Maschine 2 strömungstechnisch vorschaltbar. Des Weiteren ist die Anordnung 1 zum Erzeugen des Kühlfluids in Form von gekühlter Umgebungsluft eingerichtet.

Die Anordnung 1 weist einen zum Komprimieren von Umgebungsluft eingerichteten Verdichter 3 auf. Der Verdichter 3 ist mechanisch mit einer Turbine 4 einer Gasturbine 5 und der rotierenden elektrischen Maschine 2 gekoppelt und wird über die Turbine 4 angetrieben. Die Gasturbine 5 verfügt des Weiteren über eine Brennkammer 6. Die Umgebungsluft wird von dem Verdichter 3 angesaugt und komprimiert. Als Verdichter 3 wird folglich ein Verdichter 3 einer mechanisch mit der zu kühlenden rotierenden elektrischen Maschine 2 gekoppelten Gasturbine 5 verwendet.

Die Anordnung 1 umfasst des Weiteren einen zum Abkühlen von komprimierter Umgebungsluft auf Umgebungstemperatur eingerichteten, dem Verdichter 3 strömungstechnisch über eine Leitung 7 nachgeschalteten und als Luftkühler ausgebildeten Wärmetauscher 8 auf. Der Verdichter 3 ist über die Leitung 7 und die Brennkammer 6 strömungstechnisch mit der Turbine 4 verbunden.

Die Anordnung 1 umfasst ferner eine zum Dekomprimieren von abgekühlter Umgebungsluft auf Umgebungsdruck eingerichtete, dem Wärmetauscher 8 strömungstechnisch über eine Leitung 9 nachgeschaltete Dekompressionseinrichtung 10. Die Dekompressionseinrichtung 10 ist der rotierenden elektrischen Maschine 2 strömungstechnisch vorschaltbar.

In einer ersten Variante, welche mittels durchgezogener Linien dargestellt ist, ist die Dekompressionseinrichtung 10 durch ein Expansionsventil 11 gebildet. In einer alternativen oder zusätzlichen Variante, welche durch gestrichelte Linien dargestellt ist, ist die Dekompressionseinrichtung 10 durch eine Entspannungsturbine 12 ausgebildet. Die Entspannungsturbine 12 ist zur Erzeugung von elektrischer Energie mechanisch mit einem weiteren Generator 13 gekoppelt.

An dem Ausgang 14 bzw. 15 liegt ein Kühlfluid beispielsweise in Form von gekühlter Umgebungsluft vor, welches der zu kühlenden rotierenden elektrischen Maschine 2 zuführbar ist. Hierzu weist die Anordnung 1 nicht näher dargestellte, an der rotierenden elektrischen Maschine 2 angeordnete Kühlleitungen auf, über die gekühlte Umgebungsluft gezielt bestimmten Abschnitten der rotierenden elektrischen Maschine 2 zuführbar ist.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Kühlen einer rotierenden elektrischen Maschine (2), insbesondere eines Turbogenerators,
unter Verwendung eines in zumindest einem Teilbereich zwischen einem Rotor und einem Stator der rotierenden elektrischen Maschine (2) strömenden Kühlfluids,
**dadurch gekennzeichnet, dass**
als Kühlfluid gekühlte Umgebungsluft verwendet wird.

2. Verfahren gemäß Anspruch 1,
wobei die gekühlte Umgebungsluft gezielt wenigstens einem bestimmten Abschnitt der rotierenden elektrischen Maschine (2) zugeführt wird.

3. Verfahren gemäß Anspruch 1 oder 2,
wobei zum Kühlen der Umgebungsluft ungekühlte Umgebungsluft komprimiert, die komprimierte Umgebungsluft, insbesondere auf Umgebungstemperatur, abgekühlt und die abgekühlte Umgebungsluft, insbesondere auf Umgebungsdruck, dekomprimiert wird.

4. Verfahren gemäß Anspruch 3,
wobei die ungekühlte Umgebungsluft mittels wenigstens eines Verdichters (3) komprimiert wird,
wobei als Verdichter (3) ein Verdichter (3) einer mechanisch mit der rotierenden elektrischen Maschine (2) gekoppelten Gasturbine (5) oder ein separater Verdichter (3) verwendet wird.

5. Verfahren gemäß Anspruch 3 oder 4,
wobei die komprimierte Umgebungsluft mittels wenigstens eines Wärmetauschers (6), insbesondere auf die Umgebungstemperatur, abgekühlt wird.

6. Verfahren gemäß einem der Ansprüche 3 bis 5,
wobei die abgekühlte Umgebungsluft mittels wenigstens eines Expansionsventils (11) oder mittels zumindest einer Entspannungsturbine (12), insbesondere auf Umgebungsdruck, dekomprimiert wird.

7. Verfahren gemäß einem der Ansprüche 1 bis 6,
wobei zumindest ein Teil des zwischen dem Rotor und dem Stator strömenden Kühlfluids an wenigstens einem vorgebbaren Abschnitt der rotierenden elektrischen Maschine (2) aus der rotierenden elektrischen Maschine (2) abgesaugt wird.

8. Anordnung (1) zum Kühlen einer rotierenden elektrischen Maschine (2), insbesondere eines Turbogenerators,
unter Verwendung eines Kühlfluids,
wobei die Anordnung (1) der rotierenden elektrischen Maschine (2) strömungstechnisch vorschaltbar ist,
**dadurch gekennzeichnet, dass**
die Anordnung (1) zum Erzeugen des Kühlfluids in Form von gekühlter Umgebungsluft eingerichtet ist.

9. Anordnung (1) gemäß Anspruch 8,
aufweisend wenigstens eine an der rotierenden elektrischen Maschine (2) angeordnete Kühlleitung, über die gekühlte Umgebungsluft gezielt wenigstens einem bestimmten Abschnitt der rotierenden elektrischen Maschine (2) zuführbar ist.

10. Anordnung (1) gemäß Anspruch 8 oder 9,
aufweisend wenigstens einen zum Komprimieren von Umgebungsluft eingerichteten Verdichter (3), zumindest einen zum Abkühlen von komprimierter Umgebungsluft, insbesondere auf Umgebungstemperatur, eingerichteten, dem Verdichter (3) strömungstechnisch nachgeschalteten Wärmetauscher (8) und mindestens eine zum Dekomprimieren von abgekühlter Umgebungsluft, insbesondere auf Umgebungsdruck, eingerichtete, dem Wärmetauscher (8) strömungstechnisch nachgeschaltete Dekompressionseinrichtung (10),
wobei die Dekompressionseinrichtung (10) der rotierenden elektrischen Maschine (2) strömungstechnisch vorschaltbar ist.

11. Anordnung (1) gemäß Anspruch 10,
wobei der Verdichter (3) ein Bestandteil einer mechanisch mit der rotierenden elektrischen Maschine (2) gekoppelten Gasturbine (5) oder ein separates Bauteil ist.

12. Anordnung (1) gemäß Anspruch 10 oder 11,
wobei die Dekompressionseinrichtung (10) durch wenigstens ein Expansionsventil (11) oder durch zumindest eine Entspannungsturbine (12) ausgebildet ist.
